# EUROPEAN PATENT APPLICATION

(11) **EP 4 303 341 A1**
(43) Date of publication of application: **10.01.2024**
(21) Application number: 22000176.2
(22) Date of filing: 05.07.2022
(51) Int. Cl.: C25B 1/01, C25B 1/04, C25B 3/21

(54) **"CUBE WITH BACKREST" BIONIC CATALYTIC PHOTOCELL FOR THE SPLITTING OF WATER IN HYDROGEN AND OXYGEN**

(71) Applicant: Geier, Stefan A., 83071 Haidholzen bei Rosenheim (DE)
(72) Inventor: Geier, Stefan A., 83071 Haidholzen bei Rosenheim (DE)

(57) **Abstract**

"Cube with backrest" structure (respective nanoscale machine including the Ångström, respective picoscale size range) for splitting 2 H₂O (in general: 1 or more H₂X) in the sense of the KOK cycle of photosynthesis II by means of four electrons (general: even number) centralized in a "cube with backrest" structure (a reduced tesseract) formed with atoms, ions or molecules (e.g. ten atoms in Mn₄O₅Ca), and stored (for a short time) in this structure. The four (general: even number) electrons are derived of two to the "cube with backrest" structure attached molecules H₂O (general: 1 or more H₂X), and after the splitting of the water (general: H₂X) molecule(s) the fusion product(s) hydrogen (two molecules, or 4 H⁺ and four electrons; general: even number of particles), and oxygen (one molecule O₂; general: 1, 2, ... X, or equivalent X₂) evolve. This concept represents a consistent solution of the KOK-JOLIOT cycle problem of photosynthesis.

## Description

Stefan Geier New Bionic Photocell (steric threedimensional core catalytic structure):
Chemical drawing: Photosystem II related water splitting with four electrons: Mn₄O₅Ca catalytic core of the oxygen evolving complex of Photosystem II (KOK cycle): The cube + backrest structure allows three squares + circles to be filled up with one electron while being separated. The fourth loading with an electron connects the four efectrons via at feast two sides (lenghts), max 3 sides (proof: see photo below; see geometry, 3D tessellation, and topology: Roger PENROSE "Road to Reality", 2005, Vintage); the system is conjugated now; energy respective electrons can be transferred to water splitting. The KOK cycle problem is solved, too.

The electron loading of the cube + backrest structure can be made by every electron loading system and thus remains open to the user of my patent (attempted).

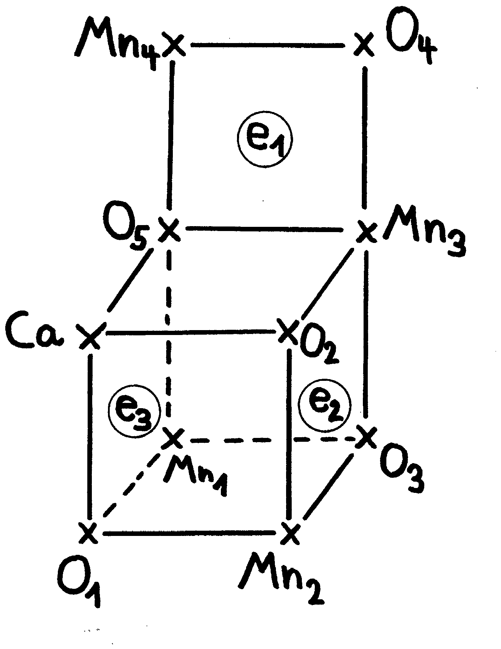

## Claims

1. "Cube with backrest" structure in the Ångström size range for the fission of 2 H₂O in the sense of the KOK-JOLIOT cycle of photosynthesis II by means of four electrons which are sequentially brought together in a "cube with backrest" structure formed with atoms, ions and/or molecules (e.g. Mn₄O₅Ca), and stored (for a short time) in this structure. The four electrons are derived by two (etc.) molecules H₂O which are thereby splitted, and the fission products hydrogen (4 atoms H, or 4H⁺, and four electrons, or two molecules H₂), and oxygen (one molecule O₂), emerge.

2. "Cube with backrest" structure (respective nanoscale machine including the Ångström respective picoscale size range) for splitting 2 H₂O in the sense of the KOK cycle of photosynthesis II by means of four electrons centralized in a "cube with backrest" structure formed with atoms, ions and/or molecules (e.g. Mn₄O₅Ca), and stored (for a short time) in this structure. The four electrons are derived of two (etc.) to the "cube with backrest" structure attached molecules H₂O, and after the fission of the water molecules the fusion product(s) hydrogen (two molecules, or 4H⁺ and four electrons), and oxygen (one molecule O₂) evolve.

3. "Cube with backrest" structure (respective nanotechnological machine including the Ångström respective picoscale size range) for splitting 2 H₂O in the sense of the KOK cycle of photosynthesis II by means of four electrons centralized in a "cube with backrest" structure formed with atoms, ions and/or molecules (e.g. Mn₄O₅Ca), and stored (for a short time) in this structure. The four electrons are derived of two (etc.) to the "cube with backrest" structure attached molecules H₂O (e.g. at the seating area, and at the nearby backrest area), and after the fission of the water molecules the fusion product(s) hydrogen (two molecules; or 4H⁺, and four electrons), and oxygen (one molecule O₂) evolve.

4. "Cube with backrest" structure (respective nanotechnological machine in the Ångström size range) for splitting two molecules water in the sense of the KOK cycle of photosynthesis II by means of four electrons, which are brought together in a "cube with backrest" structure formed with atoms, ions and/or molecules (e.g. Mn₄O₅Ca), and stored (for a short time) in this "cube with backrest" structure. The four electrons are derived by two (etc.) molecules H₂O attached to the "cube with backrest" structure. By a possible integration of the "cube with backrest" structure into proteins mimicking the photosynthesis II complex (or related structures) the electrons can be donated to the Tyrosine Z amino acid (residual) element of the protein complex by an electric potential difference (voltage) of about 1 V (+-0.5 V). After the fission of two molecules water attached to the "cube with backrest" structure the fusion product(s) hydrogen (two molecules, or 4H⁺ and four electrons), and oxygen (one molecule O₂) evolve.

5. "Cube with backrest" structure (respective nanotechnological machine in the Ångström respective picoscale size range) for splitting water in the sense of the KOK-JOLIOT cycle of photosynthesis II by means of four electrons centralized in a "cube with backrest" structure formed with atoms, ions and/or molecules by a X₄O₅Y cuboid crystal equivalent structure (with X, Y atoms respective ions, or molecules; e.g. with X, Y metals: e.g. heterometallic Mn₄O₅Ca) by storing four electrons derived from H₂O molecules attaching to the "cube with backrest" X₄O₅Y structure. The four electrons are derived by two (etc.) to the "cube with backrest" structure attached molecules H₂O. By a possible integration of the "cube with backrest" structure into proteins being, or mimicking the photosynthesis II complex (or related structures) the electrons can be donated to the Tyrosine Z amino acid (residual) element of the protein complex by an electric potential difference (voltage) of about 1 V (+-0.5 V). After the fission of two molecules water attached to the "cube with backrest" structure the fusion product(s) hydrogen (two molecules, or 4H⁺ and four electrons), and oxygen (one molecule O₂) evolve.

6. "Cube with backrest" structure (respective nanotechnological machine in the Ångström respective picoscale size range) for splitting 4 H₂S into 2 H₂ (respective 4 H+, and 4 electrons) and 2 5 (respective S₂; or FeS₂, or 2 Fe5 in the presence of iron and water) similar to the sense of the KOK cycle of photosynthesis II by means of four electrons centralized in a "cube with backrest" structure formed with atoms, ions and/or molecules (e.g. heterometallic Mn₄O₅Ca cluster), and stored (for a short time) in this structure. The four electrons are derived of two (etc.) to the "cube with backrest" structure attached molecules H₂S according to the laws of physics and of chemistry, including the laws, and principles of quantum physics [also energy and momentum transfers from bosons (photons, gravitons, ...) to fermions (electrons, H₂S, ...)], and physical chemistry (including electronegativity), and after the fission of the hydrogen sulfide molecules the fusion product(s) hydrogen (two molecules, or 4H⁺, and four electrons), and sulfur [or iron sulfur molecule(s) like FeS, or feS₂ etc.] evolve.

7. Nanotechnological device (respective structure, or "machine" including the Ångström, respective picoscale size range) for splitting water into oxygen and hydrogen (or H⁺ and electrons) in the sense of the KOK cycle of photosynthesis II by means of a "cube with backrest" structure formed by a X₄O₅Y crystal(oid) structure (with X, Y atoms, or molecules; e.g. with X, Y metals: e.g. heterometallic Mn₄O₅Ca) by storing four electrons derived from 2 H₂O molecules attaching to the "cube with backrest" X₄O₅Y structure. The four electrons are derived by two (etc.) to the "cube with backrest" structure attached molecules H₂O according to the laws of physics, including the laws and principles of quantum physics [including energy and momentum transfers from bosons (photons, gravitons, ...) to fermions (electrons, water, ...)], and physical chemistry, and the fusion products oxygen (one molecule) and hydrogen (four protons, and four electrons, or two molecules respectively) are formed.

8. "Cube with backrest" structure (respective nanotechnological machine including the Ångström respective picoscale size range) for splitting 2 H₂X (X is an element of interest, primarily a nonmetal, or metalloid) ) in the sense of the KOK cycle of photosynthesis II by means of four electrons centralized in a "cube with backrest" structure formed with atoms, ions and/or molecules (e.g. Mn₄O₅Ca), and stored (for a short time) in this structure. The four electrons are derived of two (etc.) to the "cube with backrest" structure attached molecules H₂X (e.g. at the seating area, and at the nearby backrest area), and after the fission of the H₂X molecules the fusion product(s) hydrogen (two molecules; or 4H⁺, and four electrons), and X (one molecule X₂, or 2 X, or equivalent) evolve.

9. "Cube with backrest" structure (respective nanotechnological machine including the Ångström respective picoscale size range) for splitting H₂X (X is an element of interest, primarily a nonmetal, or metalloid) in the sense of the KOK cycle of photosynthesis II by means of electrons centralized in a "cube with backrest" structure formed with atoms, ions and/or molecules (e.g. Mn₄O₅Ca) and stored (for a short time) in this structure. The electrons are derived of one or more to the "cube with backrest" structure attached molecules H₂X (e.g., at the seating area, or at the nearby backrest area). By a possible integration of the "cube with backrest" structure into proteins being, or mimicking the photosynthesis II complex (or related structures) the electrons can be donated to the Tyrosine Z amino acid (residual) element of the protein complex including cytochromes by an electric potential difference (voltage) of about 1 V (+-0.5 V). After the fission of the H₂X molecule(s) the fusion product(s) hydrogen (one or more molecules; or 2 or more H⁺, and electrons), and X (one molecule X₂, or 2 X, or equivalent) evolve.

10. "Cube with backrest" structure (respective nanotechnological machine including the Ångström respective picoscale size range) for splitting H₂X (X is an element of interest, primarily a nonmetal, or metalloid) similar to the sense of the KOK cycle of photosynthesis II by means of electrons centralized in a "cube with backrest" structure formed with atoms, ions and/or molecules (e.g. Mn₄O₅Ca) and stored (for a short time) in this structure. The electrons are derived of one or more to the "cube with backrest" structure attached molecules H₂X. After the fission of the H₂X molecule(s) the fusion product(s) hydrogen (one or more molecules; or 2 or more H⁺, and electrons), and X (one molecule X₂, or 2 X, or stoichiometric equivalent) evolve.
